# EUROPEAN PATENT APPLICATION

(11) **EP 3 836 110 A1**
(43) Date of publication of application: **16.06.2021**
(21) Application number: 19214505.0
(22) Date of filing: 09.12.2019
(51) Int. Cl.: G08G 1/00, G05D 1/02

(54) **A METHOD FOR AUTONOMOUS CONTROL OF VEHICLES OF A TRANSPORTATION SYSTEM**

(71) Applicant: Ningbo Geely Automobile Research & Development Co. Ltd., Hangzhou Bay New District Ningbo 315336 (CN); Zhejiang Geely Holding Group Co., Ltd., Zhejiang 310051 (CN)
(72) Inventor: BRANDIN, Magnus, 435 38 MÖLNLYCKE (SE)
(74) Representative: Zacco Sweden AB

(57) **Abstract**

The invention relates to a method for autonomous control of vehicles of a transportation system (20) comprising a vehicle platoon (21) for driving along a road (22) and a vehicle station (23) providing a vehicle (24) for the vehicle platoon. The method comprises the steps of receiving information (9b, 11) about the vehicle platoon (21) which drives along the road (22) and will pass the vehicle station (23) without stopping at the vehicle station, and, based on the received information (9b, 11) about the vehicle platoon (21) incoming to the vehicle station (23), controlling the vehicle (24) to leave the vehicle station (23) and accelerate along an acceleration ramp (25) connected to the road (22), and thereafter controlling the vehicle (24) to connect to the vehicle platoon (21) when the vehicle platoon passes the vehicle station (23).

## Description

### TECHNICAL FIELD

The invention relates to a method for autonomous control of vehicles of a transportation system and a control system for autonomous control of vehicles of a transportation system.

### BACKGROUND

In a transportation or traffic system comprising vehicle platoons, where each vehicle platoon has a lead vehicle and a plurality of following vehicles driving in a convoy after the lead vehicle, there is a need for individual vehicles to connect and disconnect to/from vehicle platoons. The connection and disconnection of a vehicle to/from a vehicle platoon should however be performed without disturbances leading to delays and longer driving times.

### SUMMARY

An objective of the invention is to provide a method for autonomous control of vehicles of a transportation system, by which method connection of a vehicle to a vehicle platoon can be performed in an efficient way.

The objective is achieved by a method for autonomous control of vehicles of a transportation system comprising a vehicle platoon for driving along a road and a vehicle station providing a vehicle for the vehicle platoon, where the method comprises the steps of receiving information about the vehicle platoon which drives along the road and will pass the vehicle station without stopping at the vehicle station, and, based on the received information about the vehicle platoon incoming to the vehicle station, controlling the vehicle to leave the vehicle station and accelerate along an acceleration ramp connected to the road, and thereafter controlling the vehicle to connect to the vehicle platoon when the vehicle platoon passes the vehicle station.

The invention is based on the insight that by such a method, a vehicle can be connected to a vehicle platoon while maintaining a significant velocity of the vehicle platoon. A vehicle may connect to a vehicle platoon having a certain planned destination without any delay and driver assistance. The information about the vehicle platoon can comprise for example the position and speed of the vehicle platoon, suitably received when the incoming vehicle platoon approaches the vehicle station, and/or the point in time the vehicle platoon will pass the vehicle station. Such information can be updated until the vehicle platoon has passed the vehicle station.

According to one embodiment of the method, the method comprises the steps of controlling the vehicle to connect to the vehicle platoon in a position after the last vehicle of the vehicle platoon at a rear end of the vehicle platoon. Hereby, safety can be improved and the control can be less complicated, since the timing of the connection is less critical. In addition, a minimum of energy can be used since no gap between vehicles of the vehicle platoon has to be created.

According to a further embodiment of the method, the method comprises the steps of controlling the vehicle to accelerate from zero to substantially the same speed as the vehicle platoon has when passing the vehicle station. Hereby, the time used for performing the connection and any adjustments of the vehicle speed for achieving intended time gap to other vehicles of the vehicle platoon can be reduced.

According to a further embodiment of the method, the method comprises the steps of performing the acceleration of the vehicle provided that the vehicle platoon is detected to be in a predetermined position relative to the vehicle station. Hereby, safety can be improved and any unnecessary acceleration of a vehicle can be avoided.

A further objective of the invention is to provide a method for autonomous control of vehicles of a transportation system, by which method disconnection of a vehicle from a vehicle platoon can be performed in an efficient way.

The objective is achieved by a method for autonomous control of vehicles of a transportation system comprising a vehicle platoon for driving along a road and a vehicle station, where the method comprises the steps of receiving information about the vehicle platoon which drives along the road and will pass the vehicle station without stopping at the vehicle station, and, based on the received information about the vehicle platoon incoming to the vehicle station, controlling a vehicle of the vehicle platoon to disconnect from the vehicle platoon when the vehicle platoon passes the vehicle station, and thereafter controlling the vehicle to decelerate along a deceleration ramp connected to the road and enter the vehicle station.

The invention is based on the insight that by such a method, a vehicle can be disconnected from a vehicle platoon while maintaining a significant velocity of the vehicle platoon. A vehicle may disconnect from a vehicle platoon at a certain planned destination without any delay and driver assistance. The information about the vehicle platoon can comprise for example the position and speed of the vehicle platoon, suitably received when the vehicle platoon approaches the vehicle station, and/or the point in time the vehicle platoon will pass the vehicle station. Such information can be updated until the vehicle platoon has passed the vehicle station.

According to one embodiment of the method, the method comprises the steps of controlling the last vehicle of the vehicle platoon at a rear end of the vehicle platoon to disconnect from the vehicle platoon. Hereby, safety can be improved and the control can be less complicated, as there will be no impact on the remaining vehicles of the vehicle platoon.

According to a further aspect of the invention, an objective is to provide a control system for autonomous control of vehicles of a transportation system, by which control system connection of a vehicle to a vehicle platoon can be performed in an efficient way.

This objective is achieved by a control system for autonomous control of vehicles of a transportation system comprising a vehicle platoon for driving along a road and a vehicle station providing a vehicle for the vehicle platoon, where the control system is configured to receive information about the vehicle platoon which drives along the road and will pass the vehicle station without stopping at the vehicle station, and, based on the received information about the vehicle platoon incoming to the vehicle station, configured to control the vehicle to leave the vehicle station and accelerate along an acceleration ramp connected to the road, and to control the vehicle to connect to the vehicle platoon when the vehicle platoon passes the vehicle station.

A further objective is to provide a control system for autonomous control of vehicles of a transportation system, by which control system disconnection of a vehicle from a vehicle platoon can be performed in an efficient way.

This objective is achieved by a control system for autonomous control of vehicles of a transportation system comprising a vehicle platoon for driving along a road and a vehicle station, where the control system is configured to receive information about the vehicle platoon which drives along the road and will pass the vehicle station without stopping at the vehicle station, and, based on the received information about the vehicle platoon incoming to the vehicle station, configured to control a vehicle of the vehicle platoon to disconnect from the vehicle platoon when the vehicle platoon passes the vehicle station, and to control the vehicle to decelerate along a deceleration ramp connected to the road and enter the vehicle station.

In addition, the invention also relates to a transportation system according to claim 14.

The advantages of the control systems and the transportation system are similar to the advantages already discussed hereinabove with reference to the different embodiments of the methods.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1 shows a vehicle platoon,
Fig. 2 shows a transportation system with a vehicle station, where a vehicle platoon is incoming to the vehicle station,
Fig. 3 shows a control system for autonomous control of vehicles of the transportation system, and a vehicle connecting to the vehicle platoon at the vehicle station, and
Fig. 4 shows a control system for autonomous control of vehicles of the transportation system, and a vehicle disconnecting from the vehicle platoon at the vehicle station.

### DETAILED DESCRIPTION OF EXAMPLE EMBODIMENTS

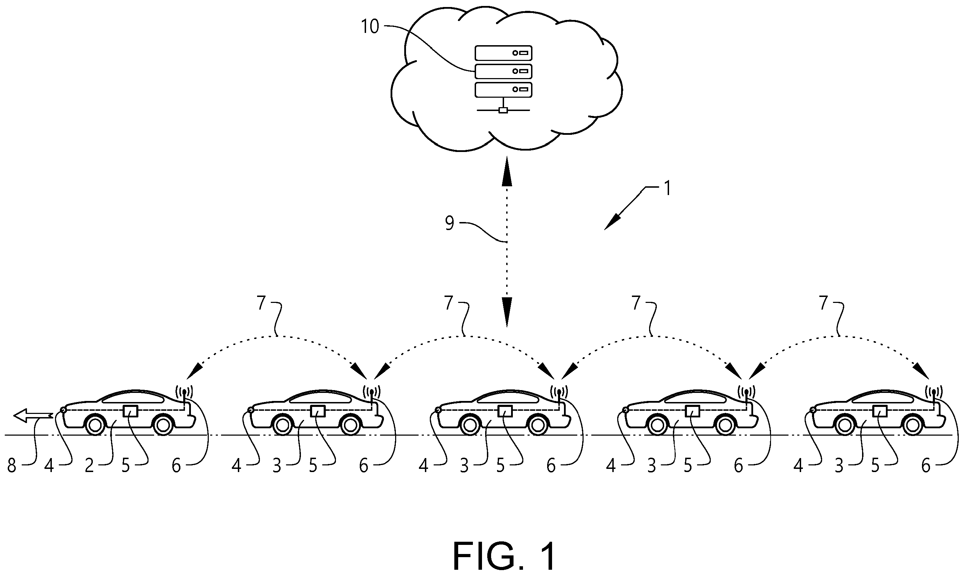

Fig. 1 shows a vehicle platoon 1 having a lead vehicle 2 and a plurality of following vehicles 3. The lead vehicle 2 and the following vehicles 3 are individual vehicles but driven together as a group or convoy. The following vehicles 3 are positioned in a line after the lead vehicle 2. The driving direction is indicated with an arrow 8. The lead vehicle 2 can be a so called autonomous or self-driving vehicle, or the lead vehicle 2 can be at least partly controlled by an operator of the lead vehicle. The following vehicles 3 of the vehicle platoon are suitably automatically controlled without any driver assistance. The vehicles are suitably used for transportation of passengers of the vehicles, though the vehicles can also be used for transporting goods.

When driving in the vehicle platoon 1, the following vehicles 3 are controlled to follow the lead vehicle 2 or the vehicle closest to the front, such that when the speed of the lead vehicle 2 is increased/decreased the speed of the following vehicles 3 is increased/decreased correspondingly for maintaining or achieving the desired distances and time gaps between the vehicles. Further, when the lead vehicle 2 is changing driving direction, a following vehicle 3 will also change driving direction and follow the lead vehicle or rather the vehicle closest to the front.

For enabling the vehicles 2, 3 to be controlled, each vehicle can be provided with any suitable sensor equipment 4 for receiving information about the environment, and a control unit 5 for controlling the vehicle. The sensor equipment gives information about at least the vehicle closest to the front, but preferably the sensor equipment is covering 360 degrees around the vehicle for obtaining the information that is required for longitudinal and lateral control of the vehicle. Such sensor equipment 4 may comprise lidar, radar and ultrasonic sensors, cameras, etc. The information received by the sensor equipment is used by the control unit 5 for controlling the driving behaviour of the vehicle. In addition, maps, GPS, etc., can be used for determining the current position of a vehicle platoon or an individual vehicle of a vehicle platoon.

Alternatively or in addition to the sensor equipment 4, each vehicle 2, 3 is provided with a communication unit 6 for communicating with one or more of the other vehicles of the vehicle platoon 1. Such a communication unit 6 may comprise any suitable components for establish communication between the vehicles. For example, the communication unit 6 may comprise a transmitter and a receiver based on radio waves or microwaves. In other words, each vehicle can be part of a local network for communication 7 between the vehicles of the vehicle platoon 1. By means of the local network, control signals can be transmitted from one vehicle to another vehicle. The control signals received are then used by the control unit 5 arranged on the vehicle for controlling the driving behaviour of the vehicle. Such control signals received by the following vehicles 3 are preferably at least initially provided by the lead vehicle 2.

Such a vehicle platoon 1 of a transportation system is suitably part of a central network for communication 9 between the vehicle platoon 1 and a central control unit 10. By means of the central network, control signals can be transmitted from the central control unit 10 to the vehicle platoon 1 for controlling the driving behaviour of the vehicle platoon. Such control signals are preferably received by the lead vehicle 2 of the vehicle platoon, but could also be received by one or more of the following vehicles 3 of the vehicle platoon. The central control unit 10 can be part of a server of a wireless network, such as Internet, for cloud computing.

The term "connected" to a vehicle platoon used herein, means that a vehicle is part of the vehicle platoon following the route of the vehicle platoon, where the vehicle is driven with a predetermined distance and time gap relative to the other vehicles of the vehicle platoon. In addition to follow the lead vehicle of the vehicle platoon, the vehicle is suitably connected to said local network for communication between the vehicles associated with the current vehicle platoon. The vehicles of the vehicle platoon are however individually driven vehicles as previously described hereinabove, though driven together as a group or convoy. The term "disconnected" is the opposite to "connected", i.e. used for a vehicle not being part of the current vehicle platoon.

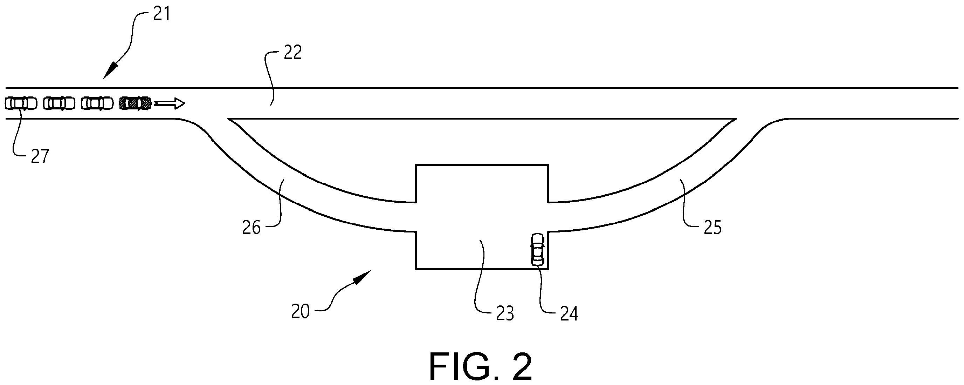

Fig. 2 shows a transportation system 20 which comprises a vehicle platoon 21 for driving along a road 22 and a vehicle station 23 providing a vehicle 24 for the vehicle platoon 21. The transportation system 20 may comprise one or more such vehicle platoons of the type previously described hereinabove, preferably several vehicle platoons, and vehicles, and several vehicle stations. The vehicle station 23 is preferably a limited area adjacent to the road 22 which area is arranged for and has space for a lot of vehicles to be used by the transportation system. Also buildings can be arranged in this area. The vehicles at the vehicle station 23 can be predetermined vehicles dedicated to be used in the transportation system and/or be any vehicle which has been driven to the vehicle station which vehicle is adapted and allowed to connect and log on to the transportation system.

The transportation system 20 has an acceleration ramp 25 connecting the vehicle station 23 and the road 22 to each other, for acceleration of the vehicle 24 for connection of the vehicle 24 to the vehicle platoon 21 when the vehicle platoon passes the vehicle station 23 without stopping at the vehicle station. The transportation system 20 further comprises a deceleration ramp 26 connecting the vehicle station 23 and the road 22 to each other, for disconnection of a vehicle 27 from the vehicle platoon 21 when the vehicle platoon passes the vehicle station 23 without stopping at the vehicle station, and for deceleration of the vehicle 27.

Such an acceleration ramp 25 and deceleration ramp 26 are suitably road sections constituting an access road part and an exit road part, respectively, relative to the road 22.

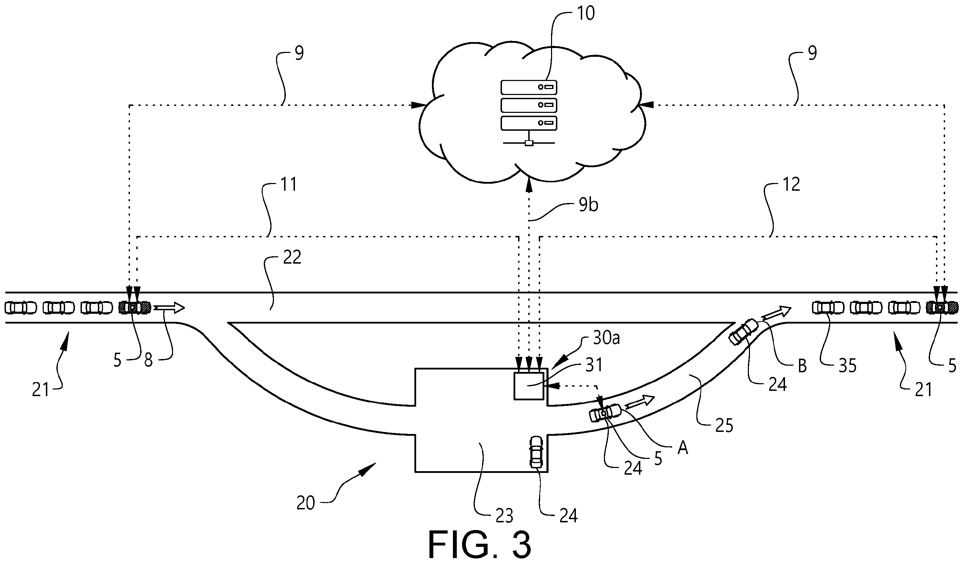

Fig. 3 shows the transportation system 20 together with a control system 30a for autonomous control of vehicles of the transportation system 20, and a vehicle 24 connecting to the vehicle platoon 21 at the vehicle station 23.

A method where a vehicle 24 is being connected to a vehicle platoon 21 will be described with reference to Fig. 3. The method for autonomous control of vehicles of the transportation system comprises receiving of information 9b, 11 about the vehicle platoon 21 which drives along the road 22 and will pass the vehicle station 23 without stopping at the vehicle station. The information is suitably received by the control system 30a when the vehicle platoon 21 approaches the vehicle station. The control system 30a is then used for controlling the vehicle 24 to be connected to the vehicle platoon 21. The control system 30a will be further described hereinafter.

Based on the received information about the vehicle platoon 21 incoming to the vehicle station 23, the vehicle 24 provided at the vehicle station 23 is controlled to leave the vehicle station and accelerate along the acceleration ramp 25 connected to the road 22. The vehicle 24 is further controlled to connect to the vehicle platoon 21 when the vehicle platoon passes the vehicle station 23.

In the example embodiment illustrated in Fig. 3, the vehicle platoon driving in the direction 8 (from left to right) is shown at two different positions corresponding to different points in time. Further, the vehicle 24 is shown in different positions during the connection procedure. The vehicle 24 is controlled to connect to the vehicle platoon 21 in a position after the last vehicle 35 of the vehicle platoon 21 at a rear end of the vehicle platoon. In another embodiment, the vehicle could however connect to the vehicle platoon between two vehicles of the vehicle platoon by first creating a gap between the vehicles of the vehicle platoon for providing space for the connecting vehicle. The vehicle 24 can be accelerated from zero to substantially the same speed as the vehicle platoon 21 has when passing the vehicle station 23. By "substantially same speed" is meant a speed equal to the vehicle platoon speed ± 20%, preferably ± 10%, and more preferably ± 5%. The vehicle 24 can suitably be accelerated to a speed of 0.8 - 0.95 times the vehicle platoon speed. A higher vehicle speed than the vehicle platoon speed will require the vehicle to be braked while a lower speed will require the vehicle to be further accelerated so as to catch up and connect to the vehicle platoon properly.

The vehicle 24 prepared to be connected to the vehicle platoon 21 can be positioned at a position A at a first end of the acceleration ramp 25. The acceleration of the vehicle 24 is suitably performed provided that the vehicle platoon 21 is detected to be in a predetermined position relative to the vehicle station 23. When the vehicle platoon 21 is detected to be in the predetermined position relative to the vehicle station 23, the acceleration of the vehicle 24 can be initiated. The time for the vehicle to accelerate to the desired speed, and drive from the position A to a position B at a second end of the acceleration ramp 25 which is connected to the road 22, is adapted to the speed and position of the vehicle platoon 21 for timing of the connection of the vehicle 24 to the vehicle platoon 21. After connection of the vehicle 24 to the vehicle platoon 21, the vehicle 24 will continue as a following vehicle of the vehicle platoon 21.

It is also possible that more than one vehicle at the vehicle station 23 are controlled to leave the vehicle station at the same time, and accelerate along the acceleration ramp and connect to the vehicle platoon.

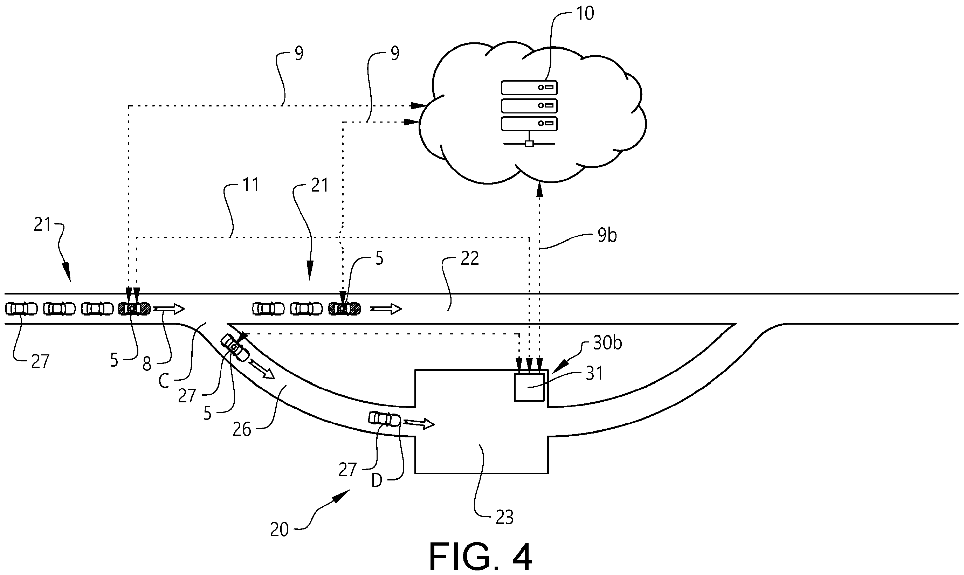

Fig. 4 shows the transportation system 20 together with a control system 30b for autonomous control of vehicles of the transportation system 20, and a vehicle 27 disconnecting from the vehicle platoon 21 at the vehicle station 23.

A method where a vehicle 27 is being disconnected from a vehicle platoon 21 is now described with reference to Fig. 4. The method for autonomous control of vehicles of a transportation system comprises receiving of information 9b, 11 about the vehicle platoon 21 which drives along the road 22 and will pass the vehicle station 23 without stopping at the vehicle station.

Based on the received information about the vehicle platoon 21 incoming to the vehicle station 23, a vehicle 27 of the vehicle platoon 21 is controlled to disconnect from the vehicle platoon when the vehicle platoon passes the vehicle station 23. The vehicle 27 is further controlled to decelerate along the deceleration ramp 26 connected to the road 22 and enter the vehicle station 23.

In the example embodiment illustrated in Fig. 4, the vehicle platoon driving in the direction 8 (from left to right) is shown at two different positions corresponding to different points in time. Further, the vehicle 27 is shown in different positions during the disconnection procedure.

The vehicle 27 prepared to be disconnected from the vehicle platoon 21 can be any following vehicle of the vehicle platoon. In the example embodiment illustrated in Fig. 4, the last vehicle 27 of the vehicle platoon 21 at a rear end of the vehicle platoon is controlled to disconnect from the vehicle platoon. At a position C at a first end of the deceleration ramp 26 which is connected to the road 22, the vehicle 27 is turned from the road 22 into the deceleration ramp 26. The vehicle 27 can then be braked from the vehicle platoon speed to zero or a low speed reached at a position D at a second end of the deceleration ramp 26, which speed is suitable for driving at the vehicle station 23.

Although the last vehicle of the vehicle platoon is disconnected in the example embodiment illustrated in Fig. 4, as previously mentioned, any following vehicle of the vehicle platoon can be disconnected at the vehicle station. When a vehicle to be disconnected has one or more vehicles behind in the vehicle platoon, the control of the vehicle is substantially the same, but the vehicle has to maintain the speed until the vehicle has been laterally moved away from the vehicle platoon. In addition, after disconnection of the vehicle, the gap between vehicles created in the vehicle platoon has to be closed, preferably by accelerating the remaining vehicles in the rear end of the vehicle platoon.

By allowing also vehicles having vehicles behind to disconnect from the vehicle platoon, the flexibility of the transportation system is further improved.

It is also possible that more than one vehicle are disconnected from the vehicle platoon at the same time, and decelerated along the deceleration ramp for entering the vehicle station.

It should be stressed that the connecting and disconnecting operations described herein are preferably performed by controlling the vehicles by means of the equipment and control units described herein, without any assistance from any driver of any of the vehicles.

The invention also relates to a control system 30a for autonomous control of vehicles of a transportation system when performing a connection operation. See Fig. 3.

The control system 30a is configured to receive information 9b, 11 about the vehicle platoon 21 which drives along the road 22 and will pass the vehicle station 23 without stopping at the vehicle station. Based on the received information about the vehicle platoon 21 incoming to the vehicle station 23, the control system 30a is configured to control the vehicle 24 to leave the vehicle station 23 and accelerate along the acceleration ramp 25 connected to the road 22. The control system 30a is further configured to control the vehicle 24 to connect to the vehicle platoon 21 when the vehicle platoon passes the vehicle station 23.

The control system 30a has suitably a vehicle station control unit 31 for controlling vehicles at the vehicle station, such as vehicles which have been disconnected from vehicle platoons at the vehicle station and vehicles which are to leave the vehicle station and be connected to vehicle platoons, and vehicles which for other reasons have to be moved and repositioned within the vehicle station area. Although in the following example embodiment, the vehicle station control unit 31 is arranged at the vehicle station 23 as a separate unit, in another embodiment the vehicle station control unit could be a part of the central control unit 10.

The vehicle station control unit 31 can communicate with the control units 5 of the vehicles 24 at the vehicle station 23. Further, the vehicle station control unit 31 can communicate with the central control unit 10 and with one or more of the control units 5 and communication units 6 arranged on the vehicles of the vehicle platoon 21, preferably with the control unit 5 of the lead vehicle of the vehicle platoon 21.

The information about the vehicle platoon 21 incoming to the vehicle station 23 can be received by the vehicle station control unit 31. The information 9b can be transferred from the central control unit 10 to the vehicle station control unit 31 and/or information 11 can be transferred directly from the vehicle platoon 21 to the vehicle station control unit 31. Such information is suitably continuously transferred from the vehicle platoon 21 to the central control unit 10. Thereafter, the vehicle 24 can be prepared for "take-off". When the vehicle platoon 21 is in a suitable position relative to the vehicle station 23, and both the vehicle platoon 21 and the central control unit 10 give green light that there is no threat or error that prevents connection of the vehicle 24, the vehicle station control unit 31 can control the vehicle 24 to accelerate along the acceleration ramp 25 for connection to the vehicle platoon 21.

Thus, based on the received information 9b, 11 about the incoming vehicle platoon 21 and updated such information 9b, 12, the vehicle station control unit 31 will control the vehicle 24 until the vehicle is being connected to the vehicle platoon 21 passing the vehicle station 23. In parallel, the control of the vehicle platoon 21 is performed by the central control unit 10 for enabling the connection of the vehicle 24 to the vehicle platoon 21. In this example embodiment, further control of the vehicle 24 after being connected to the vehicle platoon 21, will then be performed by the central control unit 10 and/or the control unit 5 of the lead vehicle of the vehicle platoon 21.

In another case where the vehicle connects to the vehicle platoon in a space between two vehicles of the vehicle platoon, the central control unit will control the vehicle platoon to provide a gap between the vehicles before connection of the vehicle at the vehicle station.

After the vehicle 24 has been connected, the stored data of the control system 30a will be updated with respect to the number of vehicles at the vehicle station 23 and the number of vehicles of the vehicle platoon 21.

The invention also relates to a control system 30b for autonomous control of vehicles of a transportation system when performing a disconnection operation. See Fig. 4.

The control system 30b is configured to receive information 9b, 11 about the vehicle platoon 21 which drives along the road 22 and will pass the vehicle station 23 without stopping at the vehicle station. Based on the received information about the vehicle platoon 21 incoming to the vehicle station, the control system 30b is configured to control a vehicle 27 of the vehicle platoon to disconnect from the vehicle platoon 21 when the vehicle platoon passes the vehicle station 23. The control system 30b is further configured to control the vehicle 27 to decelerate along the deceleration ramp 26 connected to the road 22 and enter the vehicle station 23.

Correspondingly to the connecting operation case, after relevant information has been transferred to the vehicle station control unit 31, the vehicle 27 of the vehicle platoon 21 can be prepared for "drop-off". When the vehicle platoon 21 is in a suitable position relative to the vehicle station 23, and both the vehicle platoon 21 and the vehicle station control unit 31 give green light that there is no threat or error that prevents disconnection of the vehicle 27, the central control unit 10 can control the vehicle 27 to leave the vehicle platoon 21 by turning into the deceleration ramp 26 for disconnection from the vehicle platoon 21.

Thus, based on the received information 9b, 11 about the incoming vehicle platoon 21, the central control unit 10 will control the vehicle 27 until the vehicle is being disconnected from the vehicle platoon 21 passing the vehicle station 23. In parallel, the control of the vehicle platoon 21 is performed by the central control unit 10 for enabling the disconnection of the vehicle 27 from the vehicle platoon 21. In this example embodiment, further control of the vehicle 27 after being disconnected from the vehicle platoon 21, will then be performed by the vehicle station control unit 31 and/or the control unit 5 of the vehicle 27. The vehicle station control unit 31 can be used to decelerate the vehicle 27 along the deceleration ramp 26 and further control of the vehicle 27 in the vehicle station area.

In another case where the disconnected vehicle leaves a gap between vehicles of the vehicle platoon, the central control unit will control the vehicle platoon to close the gap after disconnection of the vehicle at the vehicle station.

After the vehicle 27 has been disconnected, the stored data of the control system 30b will be updated with respect to the number of vehicles at the vehicle station 23 and the number of vehicles of the vehicle platoon 21.

The central control unit 10, the local control unit 5 arranged on a vehicle and the vehicle station control unit 31 may comprise one or more microprocessors and/or one or more memory devices or any other components for mutual communication, and for communicating with other equipment, and for controlling vehicle platoons and individual vehicles, and particularly for executing computer programs to perform the method described herein. Thus, the central control unit 10 and/or the local control unit 5 and/or the vehicle station control unit 31 is preferably provided with a computer program comprising program code means for performing the steps of any example embodiment of the method described hereinafter.

As previously described, for controlling vehicle platoons and individual vehicles, the control system 30a, 30b can be used. The control system 30a, 30b can comprise one or more central control units 10 and/or one or more vehicle station control units 31, and one or more of the local control units 5 arranged on the vehicles, which units can be used individually and in cooperation.

Optionally, the control system may comprise a decentralized network of computers not necessarily arranged in one and the same central control unit.

In addition to what has been described hereinabove, sensors can be arranged in the environment to the current road or area where the vehicle platoons or vehicles are driven. These sensors may provide information received by the control system. Such sensors could be a complement to the sensors of the vehicles for instance, giving further information and/or redundancy to the system. It is to be understood that the present invention is not limited to the embodiments described above and illustrated in the drawings; rather, the skilled person will recognize that many changes and modifications may be made within the scope of the appended claims.

## Claims

1. A method for autonomous control of vehicles of a transportation system (20) comprising a vehicle platoon (21) for driving along a road (22) and a vehicle station (23) providing a vehicle (24) for the vehicle platoon, the method comprising the steps of receiving information (9b, 11) about the vehicle platoon (21) which drives along the road (22) and will pass the vehicle station (23) without stopping at the vehicle station, and, based on the received information (9b, 11) about the vehicle platoon (21) incoming to the vehicle station (23), controlling the vehicle (24) to leave the vehicle station and accelerate along an acceleration ramp (25) connected to the road (22), and thereafter controlling the vehicle (24) to connect to the vehicle platoon (21) when the vehicle platoon passes the vehicle station (23).

2. A method according to claim 1, **characterized by** controlling the vehicle (24) to connect to the vehicle platoon (21) in a position after the last vehicle (35) of the vehicle platoon at a rear end of the vehicle platoon.

3. A method according to claim 1 or 2, **characterized by** controlling the vehicle (24) to accelerate from zero to substantially the same speed as the vehicle platoon (21) has when passing the vehicle station (23).

4. A method according to any preceding claim, **characterized by** receiving information about the position and speed of the vehicle platoon (21) incoming to the vehicle station (23).

5. A method according to any preceding claim, **characterized by** receiving information about the point in time the incoming vehicle platoon (21) will pass the vehicle station (23).

6. A method according to any preceding claim, **characterized by** performing the acceleration of the vehicle (24) provided that the vehicle platoon (21) is detected to be in a predetermined position relative to the vehicle station (23).

7. A method for autonomous control of vehicles of a transportation system (20) comprising a vehicle platoon (21) for driving along a road (22) and a vehicle station (23), the method comprising the steps of receiving information (9b, 11) about the vehicle platoon (21) which drives along the road (22) and will pass the vehicle station (23) without stopping at the vehicle station, and, based on the received information (9b, 11) about the vehicle platoon (21) incoming to the vehicle station, controlling a vehicle (27) of the vehicle platoon (21) to disconnect from the vehicle platoon when the vehicle platoon passes the vehicle station (23), and thereafter controlling the vehicle (27) to decelerate along a deceleration ramp (26) connected to the road (22) and enter the vehicle station (23).

8. A method according to claim 7, **characterized by** controlling the last vehicle (27) of the vehicle platoon (21) at a rear end of the vehicle platoon to disconnect from the vehicle platoon.

9. A control system (30a) for autonomous control of vehicles of a transportation system (20) comprising a vehicle platoon (21) for driving along a road (22) and a vehicle station (23) providing a vehicle (24) for the vehicle platoon, the control system (30) being configured to receive information (9b, 11) about the vehicle platoon (21) which drives along the road (22) and will pass the vehicle station (23) without stopping at the vehicle station, and, based on the received information (9b, 11) about the vehicle platoon (21) incoming to the vehicle station (23), configured to control the vehicle (24) to leave the vehicle station (23) and accelerate along an acceleration ramp (25) connected to the road (22), and to control the vehicle (24) to connect to the vehicle platoon (21) when the vehicle platoon passes the vehicle station (23).

10. A control system according to claim 9, **characterized in that** the control system (30a) is configured to control the vehicle (24) to connect to the vehicle platoon (21) in a position after the last vehicle (35) of the vehicle platoon at a rear end of the vehicle platoon.

11. A control system according to claim 9 or 10, **characterized in that** the control system (30a) is configured to control the vehicle (24) to accelerate from zero to substantially the same speed as the vehicle platoon (21) has when passing the vehicle station (23).

12. A control system according to any of claims 9-11, **characterized in that** the control system (30a) is configured to perform the acceleration of the vehicle (24) provided that the vehicle platoon (21) is detected to be in a predetermined position relative to the vehicle station (23).

13. A control system (30b) for autonomous control of vehicles of a transportation system (20) comprising a vehicle platoon (21) for driving along a road (22) and a vehicle station (23), the control system (30) being configured to receive information (9b, 11) about the vehicle platoon (21) which drives along the road (22) and will pass the vehicle station (23) without stopping at the vehicle station, and, based on the received information (9b, 11) about the vehicle platoon (21) incoming to the vehicle station (23), configured to control a vehicle (27) of the vehicle platoon (21) to disconnect from the vehicle platoon when the vehicle platoon passes the vehicle station (23), and to control the vehicle (27) to decelerate along a deceleration ramp (26) connected to the road (22) and enter the vehicle station (23).

14. A transportation system (20) comprising a vehicle platoon (21) for driving along a road (22) and a vehicle station (23) providing a vehicle (24) for the vehicle platoon, the transportation system (20) having an acceleration ramp (25) connecting the vehicle station (23) and the road (22) to each other, for acceleration of the vehicle (24) for connection of the vehicle (24) to the vehicle platoon (21) when the vehicle platoon passes the vehicle station (23) without stopping at the vehicle station.

15. A transportation system according to claim 14, **characterized in that** the transportation system (20) comprises a deceleration ramp (26) connecting the vehicle station (23) and the road (22) to each other, for disconnection of a vehicle (27) from the vehicle platoon (21) when the vehicle platoon passes the vehicle station (23) without stopping at the vehicle station and for deceleration of the vehicle (27).
